# EUROPEAN PATENT APPLICATION

(11) **EP 3 985 647 A1**
(43) Date of publication of application: **20.04.2022**
(21) Application number: 20201500.4
(22) Date of filing: 13.10.2020
(51) Int. Cl.: G09B 19/00

(54) **PATIENT MOTION TRAINING DEVICE**

(71) Applicant: Koninklijke Philips N.V., 5656 AG Eindhoven (NL)
(72) Inventor: NAUTS, Sanne, 5656 AE Eindhoven (NL); HEUVELINK-MARCK, Annerieke, 5656 AE Eindhoven (NL); SAINI, Privender Kaur, 5656 AE Eindhoven (NL); TASAR, Ozgur, 5656 AE Eindhoven (NL)
(74) Representative: Philips Intellectual Property & Standards

(57) **Abstract**

A training device for training patients scheduled to undergo a medical procedure in which they are required to hold still for a period of time includes a handheld device with a motion sensor and a display. A processor detects motion during an interactive part of the training that includes visual information based on the medical procedure that the patient will undergo and provides feedback to the patient about whether he is holding still enough or not.

## Description

### FIELD OF THE INVENTION

The present invention generally relates to a training device, a method and computer program product for training a patient scheduled to undergo a non-sedated, lightly sedated or locally sedated medical procedure and a motion guidance device for use during such a procedure.

### BACKGROUND OF THE INVENTION

In medical procedures it is often preferred that a patient is conscious, i.e. using no, light or local sedation or anesthetics during the procedure, for instance to be able to provide instructions or to prevent potentially harmful side effects of anesthesia. Undergoing a medical procedure can already be a daunting experience for a patient, but especially so if the procedure is performed while the patient is conscious. Anxiety about an illness or the procedure itself or its outcome may increase stress levels, particularly for pediatric patients. In many medical procedures the patient is required to stay still (i.e. lie, sit or stand still) to avoid complications or poor results of the procedure. Anxiety is of course unpleasant for the patient, but it may also impact an end result or alter an optimal workflow of the medical procedure. For instance, in some cases, when a patient becomes stressful then there is an increased chance of movement during the procedure or a procedure needs to be paused until the patient has calmed.

As an example, during medical imaging procedures any movement of the patient, or at least the part of the patient that is being imaged, image quality of the scan may be compromised and usually motion artefacts occur. Depending on the severity of the motion artefacts and the diagnostic question at hand, when motion occurs, there may be several consequences. The image quality of the images is suboptimal, which can make it more difficult for radiologists to correctly interpret the scan and provide a correct diagnosis (the radiologist may even make an incorrect diagnosis). In those cases the medical procedure or part thereof may need to be repeated, extending the total time of the procedure, or the patient needs to be rescheduled and in a new procedure the patient may need to be sedated with anesthetics

In many medical imaging procedures the patient is brought into a narrow tunnel-like area for the procedure, which may induce more stress due to feelings of claustrophobia and/or a loss of (visual) contact with medical personnel.

This is particularly the case for magnetic resonance imaging (MRI) scan. In order to successfully complete an MRI-exam, patients have to enter a narrow bore in a large machine while being confined within imaging coils and lay still during the scan, which typically lasts between 10 and 60 minutes. During the examination, the MRI-machine makes jarring noises that start and stop abruptly, and that are very loud (up to 118 dB, which is comparable to the loudness of a thunderclap). All of this causes anxiety in many patients and particularly in pediatric patients and often this results in sub-optimal or aborted scans.

It is known that anxious feelings can be reduced if the patient is more aware and knowledgeable about the procedure he or she is scheduled to undergo and therefor it is desired that the patient receives a proper explanation and/or training before the procedure. However, this requires time from specialists or dedicated trainers, which is costly and time-consuming. On top of that, such trainings tend to be very technical, non-intuitive and difficult to understand for many patients and particularly pediatric patients.

The training may alternatively be provided as a movie that may be watched at home or at the hospital before the procedure. This has the advantage that no medical or support personnel is needed. Also, the provided information may be tuned towards the intended audience, e.g. a more medical and serious explanation for adults, but a fun cartoon for children. However in these cases the patient only passively absorbs information and there is no check whether the information was understood, as it is a one-way stream of information without feedback.

It would therefore be advantageous if a training device would be available that could provide for a patient to experience how motion influences the medical procedure experience in an intuitive, interactive and clear manner and how the patient could help in keeping motion minimal.

### SUMMARY OF THE INVENTION

Embodiments according to the present invention are directed to a training device for training a patient scheduled to undergo a non-sedated, lightly sedated or locally sedated medical procedure that requires the patient to remain still for an extended period of time. The training device comprises a handheld device comprising a display for displaying visual information to the patient, a motion sensor arranged to detect motion information, including a motion amount, from the patient when holding the device, and a processor. The processor is configured to provide the visual information for a predetermined period of time to the patient on the display, wherein the visual information is based on the medical procedure the patient is scheduled to be undergoing. The processor is further configured to receive the motion information from the motion sensor during the predetermined period of time and to adapt the visual information to include feedback information for the patient, wherein the feedback information includes penalty information when the motion amount in the received motion information exceeds a predetermined motion threshold; and/or wherein the feedback information includes reward information when the motion amount in the motion information does not exceed the predetermined motion threshold. Such a training device allows a patient to be trained in an intuitive and interactive way about the consequences of motion during the medical procedure and the need to remain as still as possible. The patient's performance may be enhanced by providing positive feedback, negative feedback or both. Because the visual information is based on the medical procedure the patient will undergo, the training will prepare the patient optimally for the procedure and will make the patient already more familiar with the equipment, environment and/or procedure beforehand, which further helps in reducing anxiety levels and movement during the scan and thereby a higher chance of a successful procedure without the need for (partial) repeat procedures or the need for potentially harmful (full, local or partial) anesthetics or other types of sedation.

In an embodiment the handheld device is a mobile phone, tablet computer or gaming device. These are widely available devices that most patients already own or can be supplied with. Such handheld devices are easily upgraded to become a training device as claimed by loading training software onto the device.

In an embodiment the processor is arranged to communicate with an external processor that is configured to provide calculation power or additional relevant information. This allows for increased speed of processing or for supplying additional data relevant to the training, such as patient-specific data. In some case the training software may be remotely stored and accessed and run through wired or wireless communication.

In an embodiment the motion sensor is an accelerometer. These are common motion sensors that are available in most commercial handheld devices.

In an embodiment the visual information is a movie, a game or an image. These can provide strong, interactive visual content to engage the patient.

In an embodiment the visual information comprises visual and/or auditory representations of the medical procedure the patient is scheduled to be undergoing. As such the training may be made as close and relevant as possible to the actual medical procedure. Introducing visuals and/or sounds the patient will experience will make the patient more familiar with them and will add to reducing anxiety in the patient.

In an embodiment there is at least one further predetermined motion threshold and wherein the processor adapts the visual information differently after passing of each predetermined motion threshold results, for instance in several steps of severity of penalty information and/or reward information. This allows for various levels of feedback that correspond to different amounts of motion and are correlated with actual motion situations in the real procedure.

In an embodiment the medical procedure is a magnetic resonance imaging procedure, an x-ray compute tomography imaging procedure, an ultrasound imaging procedure, a diagnostic x-ray imaging procedure, a positron emission tomography, a single photon emission computed tomography an (image-guided) radiotherapy procedure, an (image-guided) interventional medical procedure or any other medical procedure in which motion may influence image quality or a successful procedure. All these procedures are often done under no, light or local sedation and require the patient to hold still for shorter or (very) long periods of time.

In an embodiment the processor is further configured to record results of consecutive multiple training sessions; display and/or transmit the results of multiple training sessions; and, optionally adapt the visual information based on the results of multiple training sessions. As such progress of the patient may be analyzed and progress may be assessed, for instance to determine if the patient is properly or sufficiently trained for the actual procedure.

In an embodiment the visual information comprises a graphical representation (avatar) based on, selected by or designed by the patient scheduled to undergo the medical procedure. This personalizes the training experience further and may engage the patient even more into the training.

The claimed invention is further directed towards a motion guidance device for guiding a patient scheduled to undergo a medical procedure comprising the training device as previously described. The training device must be compatible with and adapted for use during the medical procedure. As such the same training device may be used as a motion guidance device during the actual procedure, providing the patient with a familiar interface and potential distraction during the procedure that may reduce anxiety and/or motion.

In an embodiment of the motion guidance device the training device is connected mechanically and/or electronically to equipment used in the medical procedure, for instance a medical imaging system or a workstation for radiotherapy or image guided interventional procedures. As such visual information provided by the processor in the motion guidance device may be updated or matched with actual imagery or guidance. There may also be a feedback loop in which the game is adapted based on the actual situation.

Furthermore, knowledge gained from a patient in training using the training device may be used to optimize the actual medical procedure. For instance, by selecting in-bore guidance and/or entertainment content during a medical imaging scan most matching their preference (e.g. featuring the same avatar as was used in the training). Another example may be using observed or recorded performance during the training, e.g. the patient's 'perseverance' level (including for instance the amount of training the patient has done, a detected ability to hold still) to influence parameters of the medical procedure (e.g. select MRI sequences that are more or less motion sensitive in the case where the medical procedure is an MRI exam).The claimed invention is further directed towards a method for training a patient scheduled to undergo a medical imaging procedure, comprising the steps of: providing visual information for a predetermined period of time relating to the medical imaging procedure to the patient on the display; receiving the motion information, including a motion amount, from a motion sensor of a handheld device that, when in use, is held by the patient during the predetermined period of time; adapt the visual information based on the received motion information, wherein when the motion amount in the motion information exceeds a predetermined motion threshold, the visual information is adapted to include penalty information and/or when the motion amount in the motion information does not exceed the predetermined motion threshold, the visual information is adapted to include reward information.

In an embodiment the claimed method further comprises the steps of recording results of consecutive multiple training sessions; displaying and/or transmit the results of multiple training sessions; and optionally adapting the visual information based on the results of multiple training sessions.

The claimed invention is further directed towards a computer program product configured to perform, when in use, the steps of the aforementioned method.

Still further aspects and embodiments of the present invention will be appreciated by those of ordinary skill in the art upon reading and understanding the following detailed description. Numerous additional advantages and benefits will become apparent to those of ordinary skill in the art upon reading the following detailed description of preferred embodiments.

### BRIEF DESCRIPTION OF THE DRAWINGS

The present invention is illustrated by drawings of which
Fig. 1 shows a schematic depiction of a training device as claimed in the form of a mobile phone.
Fig. 2 shows an exemplary depiction of visual information related to a medical imaging procedure that is shown on the training device as claimed.
Fig. 3 shows an exemplary sequence of performing a training session for a medical imaging procedure on the training device as claimed.
Fig. 4 shows an exemplary depiction of visual information related to an interventional medical procedure that is shown on the training device as claimed.
Fig. 5 shows a schematic flowchart of a workflow using the training device as claimed.

The invention may take form in various components and arrangements of components, and in various process operations and arrangements of process operations. The drawings are only for the purpose of illustrating preferred embodiments and are not to be construed as limiting the invention. To better visualize certain features may be omitted or dimensions may not be according to scale.

### DETAILED DESRIPTION OF EMBODIMENTS

In the following the presently claimed invention is illustrated using an example for the case when a child between 4 and 8 years is scheduled to undergo an MRI exam. Of course, the present invention may be adapted for other medical procedures, children of other age groups or adults as well. In some cases alternatives are mentioned, but if this is not the case, then the example is not limiting the scope of the claims to exclude any other age groups or medical procedures.

The insight that forms the basis of the presently claimed invention is that patients that are scheduled to undergo a medical procedure will understand what is going to happen and what is required from them better and/or more efficiently if the information is supplied in a more interactive and engaging manner, which requires the patient to perform actions that cause the patient to immediately experience the consequences.

A further insight that underlies the presently claimed invention is that the patient will be better prepared and more familiar with the scheduled medical procedure if the information the patient receives relates directly to the scheduled procedure (improving so-called transfer of learning).

As such the present invention relates to teaching patients about the effects of motion in a medical procedure using a handheld device that presents visual information to the patient that relates to the procedure they will be undergoing. By detecting motion from the patient holding the handheld device the patient is provided immediate feedback due to changes in the visual information and/or with auditory information. The patient is taught the importance of reducing or eliminating motion by providing reward information when motion is very low and penalty information when motion becomes too much to obtain a satisfactory result.

The term handheld device is a standard term covering all devices that covers any suitable device that is meant to be held by a user when in use, irrespective of whether the patient is actually holding the device or not.

The handheld device is preferably a mobile phone as this is a device most people own or have direct access too. In other embodiments the handheld device may also be a tablet computer or a gaming device (e.g. a controller for a gaming computer or a mobile gaming computer).

A requirement of the handheld device is that is able to detect motion and is able to provide visual, and preferably auditory, information to the user. Mobile phones, and particularly smartphones, that are standardly equipped with a display screen and a motion sensor are easily available, as are many types of tablet computers and gaming devices (although in those cases the display may be an externally connected display).

As most people own or have access to a suitable handheld device, they can be supplied with the software to run the training on their handheld device. If not, then they may be given a mobile device temporarily to use the training. An advantage is that the patient can do the training with the training device at a place and time which is convenient for them, for instance at home.

In the context of the claimed invention the term 'holding' should not be interpreted as that the patient is holding the handheld device only just by holding it using one or both of his or her hands, but also encompasses any other way in which the patient can control the balance of the handheld device. For instance, some patients may not be able to hold a device in one or both of their hands in a steady manner or the patient may not be able to hold the handheld device at all, but they might be able to lie still with their head, torso or other body part(s) that need to be still during the procedure. In those cases the patient may, for instance, 'hold' the handheld device by balancing it on other body parts, preferably those most relevant for the upcoming procedure, such as the torso (i.e. belly or back when lying down), knee, leg, arm, feet, head et cetera, as long as the patient is able to influence mobility of the handheld device and receive feedback thereof.

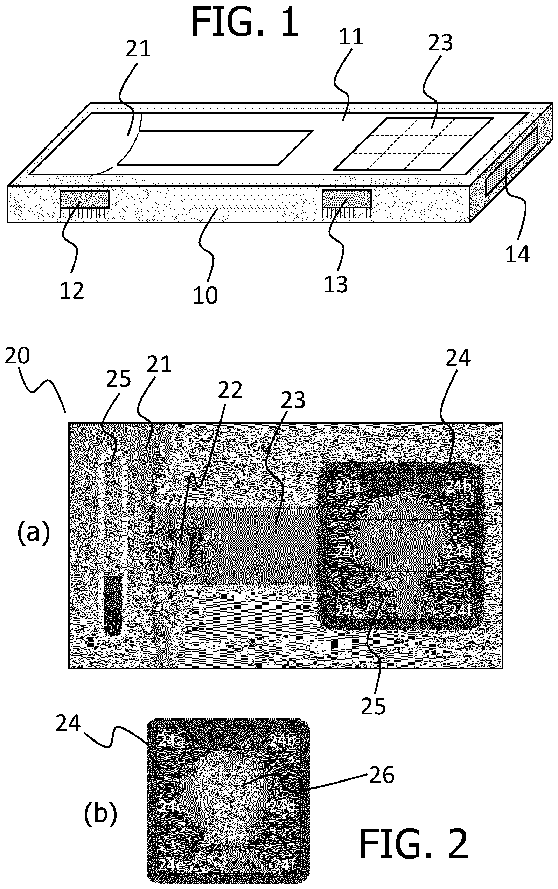

Fig. 1 shows an exemplary depiction of a training device according to the presently claimed invention that comprises a mobile phone 10, a display screen 11, an integrated processor 12, a motion sensor 13 and a loudspeaker 14.

The mobile phone 10 may be of any size, shape, model, et cetera, as long as it is suitable to handle the requirements of being used as a training device as claimed. The display screen 11 may also be of any size or type (e.g. LCD, LED and the like). Screens with a large surface area and the capability of displaying strong colors or small and precise details are preferential.

Preferably the display 11 is integrated in the mobile device 10, but the visual content may also be duplicated or transmitted to an external display screen connected by wire or wirelessly to the rest of the handheld device, for instance a remote display screen, goggles or glasses. An integrated screen 11 is the most practical and compact solution, but an external screen, which by definition in the context of the presently claimed invention would still be part of the handheld device, even though that external screen may not be meant to be handheld or portable itself. Such an external screen may be easier to use in case the patient is not able to watch an integrated screen, e.g. due to the patient's position or other reason that prevents the patient from holding the handheld device and watching the integrating screen at the same time.

The processor 12 must be capable of receiving, processing and analyzing incoming information and outputting visual, and optionally auditory, in real time. The processor may also be in contact with a remote processor, for instance through the internet or through a wired or wireless, such as Bluetooth or WiFi, connection with a local external processor, e.g. a workstation that may support the processor in processing power and/or may provide additional information, such as patient data and/or may store data of training sessions to be processed and/or reviewed automatically, by a physician for use in future sessions or to evaluate if the patient is sufficiently trained to undergo the medical procedure.

The motion sensor 13 must be sensitive enough to detect relatively small and large motions caused by the user holding the handheld device 10. Most handheld devices are equipped with a motion sensor. These are usually relatively simple accelerometers, but more advanced accelerometers or other integrated motion sensors that would be suitable are possible as well.

It is preferably that the handheld device also is capable of providing auditory information, such as sound effects, music, coaching or other informative spoken information and the like to make the experience more immersive and effective. The mobile phone 11 of the present example is therefore equipped with an integrated loudspeaker 14. Alternatively or simultaneously a headphone connection may be available to allow a headphone worn by the patient to be connected.

The visual information, optionally augmented with auditory information, is preferably in the form of an (interactive) movie, a game or a manipulatable image. The visual information may be relatively simple, but also may be complex and rich in content.

To ensure that the patient relates the training to the medical procedure he or she is scheduled to undergo, the visual information must contain elements of the medical procedure. For instance it depicts relevant medical equipment, surroundings, a goal or result of the procedure, medical staff, et cetera. This information may be presented in a generic manner or may be presented in a realistic way by using imagery of the actual medical location, equipment and/or personnel of the scheduled medical procedure.

The visual information may also be adapted to be tuned to the interests or intellectual capabilities of the patient. For instance, for pediatric patients cartoon-like visual information is likely to be more effective, while for adults more realistic visual information with varying levels of (medical) detail is likely to be more effective.

The visual information may comprise parts that are interactive and parts that are not. For instance, the visual information may start with an introductory movie about the need to keep still during the procedure, show the medical location, equipment and/or staff, instructions for the interactive part and/or any other information that may be useful. The interactive part then may for instance be in the form of a game.

The visual information may comprise a character that is based on the patient or chosen by the patient from a database of characters, which may be able to be personalized. Such a so-called avatar may be a representation of the patient in a realistic or cartoon-like form or may be in a totally different form, such as an animal, fantasy creature, et cetera. Also, in some embodiments other characters in the visual information may be based on for instance family members, medical staff or chosen from a database of preprogrammed characters.

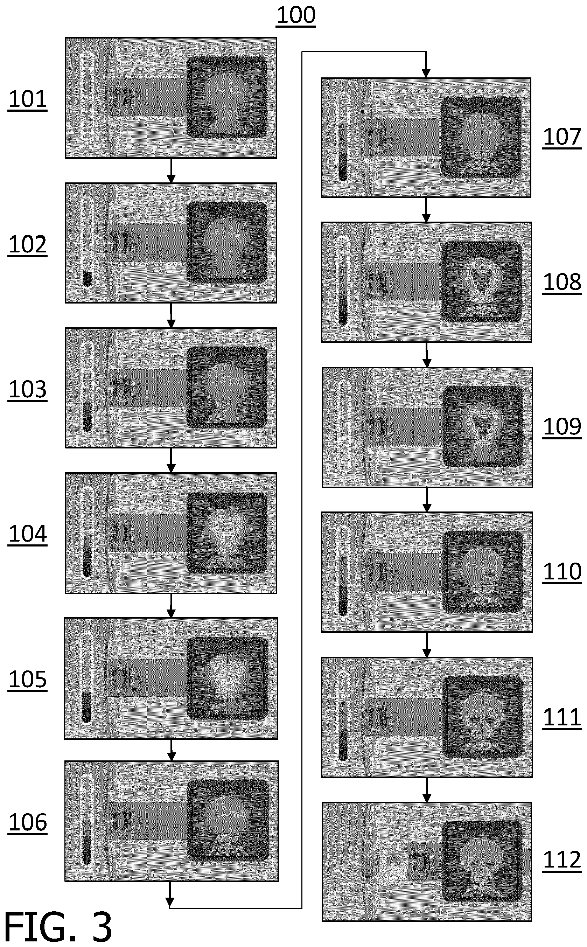

Figs. 2 and 3 depict a schematic overview of an exemplary embodiment of visual information that may be used to train a six year-old boy that needs to undergo an MRI scan of his brain. The boy chose a cartoon elephant as an avatar and after an introduction movie, featuring the chosen character, an interactive motion training game 20 is shown on the screen 11.

Fig. 2a, a screenshot of a moment in the game, shows the main elements of the exemplary motion game. In this stage of the game the MRI scan is underway while the patient is holding the training device, in this example a mobile phone running software that includes the interactive motion training module.

The game screen of this embodiment includes three main sections. In the central area of the screen an MRI device 21 is shown. The avatar 22 is shown lying on a patient support 23 with his head in the bore of the MRI device 21. This section looks similar to a scan room where the actual scan will take place, thereby already creating familiarity with the equipment and place where the patient will need to lie down. The room may be shown from multiple angels before or during the game to enhance the familiarity. On the right side a monitor screen 24 is shown on which a simulated MRI image 25 is formed during the game. The monitor screen is sub-divided into six sub-sections 24a-24f that each sequentially reveal a fraction of the full image 25. On the left side a progress bar 25 is shown. The column slowly fills up during the game and each time a horizontal marker is passed a new sub-section 24a-24f is revealed. In this screenshot two of the six sub-sections have already been revealed. The game is finished when the bar 25 is filled.

During the game the patient needs to hold the mobile phone in one or both hands and try to hold it still while the bar 25 fills up and the image 25 is revealed. When the patient moves the mobile phone too much, as detected by the motion sensor, then a warning signal is shown and/or sounded. In Fig. 2b such a warning sign 26 is shown in the form of a shaking character that, accompanied with sound effects and/or spoken comments, notify the patient that the movement was too much.

Fig. 3 shows an exemplary sequence 100 of screenshots 101-112 during the motion training game. The numbering of the sections is the same as in Fig. 2a and 2b. To avoid cluttered images all numbering besides the reference to the screenshots 101-112 themselves is omitted here.

Screenshot 101 shows the start of the game, just after the avatar 22 has entered the MRI bore 21. The progress bar 25 is empty and the MRI image 25 on the monitor screen 24 is still fully obscured. From this moment the progress bar starts filling up and the game produces sound effects of an ongoing MRI scan, i.e. loud pulse-like noises of the MRI sequence that is running to simulate those that the patient would hear during the actual scan, preferably the sounds of a sequence actually used in the procedure.

To determine if the patient is holding the mobile phone sufficiently still during the scan the motion sensor 13 is used to detect motion information, including information on the amount of motion. The motion amount may include strength or severity of movement, length of time of the movement, distance of movement or a combination of any of these. The motion information may also include information on other motion parameters, such as direction (e.g. linear, one or multi-directional, yaw, pitch, roll, et cetera), directional, length or strength changes during motion and/or periodicity of motion (e.g. regularity of intervals between motion) and/or any other relevant motion information that may be suitable. While the amount of motion or changes therein are most useful in the context of this invention, the other information may be used to better analyze the patient's motion and/or to provide more detailed feedback.

This motion information is transmitted to the processor 13 in which the amount of motion is compared to a predetermined threshold level. When the motion amount is below the predetermined threshold level then the scan will continue without any notification until the progress bar 25 is filled up to the first horizontal marker.

Screenshot 102 shows such a moment where the first horizontal marker of the progress bar is passed. The patient did not move the mobile phone with a motion amount above the threshold level and receives reward information: the first sub-section 24a of the MRI image 25 is revealed on the monitor screen 24. Preferably this is augmented with visual or auditory reward information, such as a sound effect, a congratulation, an increase in a score or a visual bonus reward, such as a medal or star. The patient also was able to keep the phone 11 sufficiently still while the progress bar 25 filled to the second horizontal marker and a second sub-section 24e of the MRI image 25 is revealed.

When the patient moves the mobile phone 11 with a motion amount above the predetermined threshold level, the patient is notified with penalty information. This may include a warning sign or message and preferably also an auditory warning such as a sound effect or spoken comment. Also the penalty information may be a lowering of a score or removal of stars shown on the screen.

In screenshot 104 the patient moved the phone 11 above the threshold level at some moment while the progress bar 25 was filling from the second to the third horizontal marker. As a result a flashing and shaking figure appears warning that the movement was too much. Again, this may be accompanied with suitable auditory information. As a result a next sub-section of the MRI image 24 is not revealed until the movement amount is lowered below the threshold level again. Alternatively an image sub-section may be revealed with a lower quality, e.g. with movement artefacts or partially blurred. Also a score or other visual rewards may be decreased.

In this embodiment there is a further threshold level, which is above the first mentioned threshold level. In this embodiment the lower threshold level means that motion was too high to obtain a good quality image, but the scan can continue. If the motion amount exceeds the higher threshold level then this means that the scan needs to be aborted. Alternatively if the motion remains for an extended, predetermined amount of time between the lower and higher threshold level, then also this may result in the patient receiving a penalty message in the form of more severe warnings or also an aborted scan.

In screenshot 1055 it can be seen that the patient managed to reduce the movement of the phone 11 and the motion amount has dropped below the lower threshold level. In this case the progress bar 25 was reset to the second horizontal marker again, indicating that a procedure can last longer if parts need to be redone.

The patient was successful in keeping the motion amount low, such that, as is shown in screenshots 106 and 107, the nest two sub-sections, 24f, 24b are revealed.

However, the patient made a sudden movement just after the fourth horizontal marker in the progress bar 25 was passed. The amount of motion was such that it exceed even the highest threshold level. The patient receives penalty information in a new flashing and shaking figure, now in a more intense color (e.g. red), augmented with sound effects and a message that the scan was unsuccessful and needs to be reset. In some embodiments a score may be or number of stars or other rewards may be severely reduced. The patient may also be forced to wait some time before the rest of the scan can be done to simulate having to re-setup the system or reposition the patient.

Luckily, the patient was able to hold the mobile phone 11 still enough after the restart and the remaining sub-sections 24c, 24d of the MRI image 25 were revealed and the progress bar 25 is fully filled. The scan ends, the full image 25 is now visible and the avatar 22 is moved out of the bore 21. As additional rewards there may be additional animation (e.g. the image winking or waving), music, a story or message, et cetera. The patient may be invited to try it again to do even better the next time, e.g. by earning more starts or obtaining a higher score if those rewards were available.

The presently claimed training device guidance device is suitable for training patients scheduled to undergo all types of medical imaging procedures, such as a magnetic resonance imaging procedure, an x-ray compute tomography imaging procedure, an ultrasound imaging procedure, a diagnostic x-ray imaging procedure, a positron emission tomography or a single photon emission computed tomography.

Furthermore the presently claimed training device is also suitable for training patients scheduled to undergo a radiotherapy treatment or an interventional medical procedure, such as a catheterization or minimally invasive surgery.

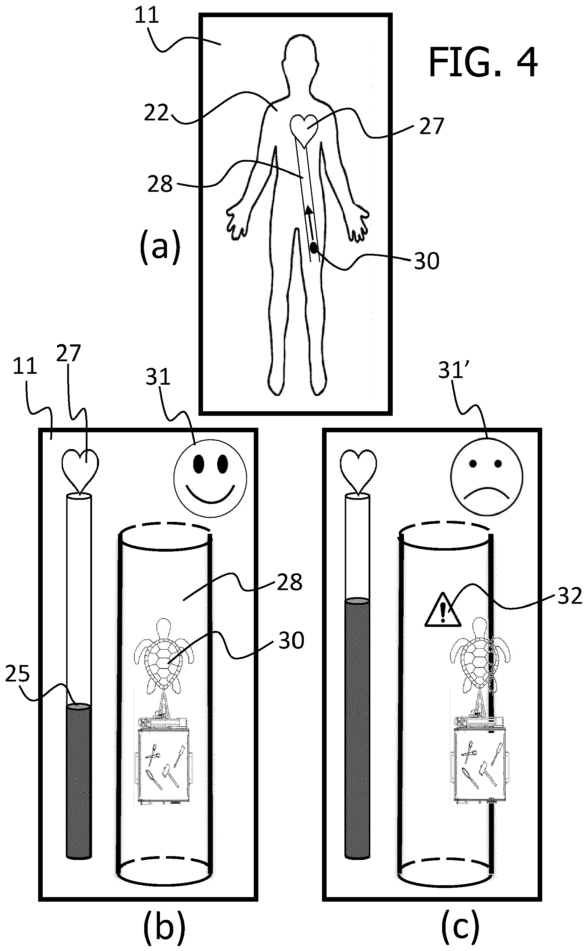

Fig. 4 depicts an example of a training device as claimed for training a patient that is scheduled to undergo an interventional medical procedure. In this exemplary case the patient is has a heart condition that will be treated using a catheterization that is inserted in a vein at the groin area.

In Fig. 4a a screen 11 of a handheld device shows an image of a person, which may in an embodiment be an actual image of or based on the patient or may be an avatar chosen by the patient. The vein through which the catheter will travel is visualized as two parallel lines enclosing a pathway 28 and the catheter tip 30 is visualized as a spot in the tube 28. When the interactive part of the training starts the catheter tip 30 will slowly move towards the destination 27, in this case the heart of the person 22 imaged on the screen. It is the objective of the patient to hold the mobile device still as any movement will cause the catheter tip 30 to deviate from its path towards the heart. The lines depicting the edge of the vein is defined as a threshold by the processor 12 and if the position of catheter tip 30 is caused to touch the edge of the vein 28 then penalty information is provided, similar to that described with the example of medical imaging of Figs. 2 and 3.

More threshold levels may be defined as well, for instance a first threshold level somewhat inside the edges of the vein that first provide a mild warning if the catheter tip 30 becomes close, but not yet touches the edge of the vein 28. Another threshold level may be that the catheter tip 30 fully breaches the vein 28, thereby causing a medical emergency resulting in aborting the procedure and the patient having to restart the motion training.

Reward information may be provided, such as encouraging messages, increasing score or visual rewards, if the patient remains within the limits for extended periods of time and when he reaches the destination 27.

Depending on the age and cognitive abilities of the patient this training device may also be adapted in style and difficulty level. The example given in Fig. 4a may be more suitable for older children or adults. The exemplary embodiment show in Figs. 4b and 4c is more suitable for younger children.

In this example the catheter tip 30 is represented by a turtle pulling a cart with equipment towards the destination. The turtle swims through a tube 28, representing the vein. A progress bar 25 that fills up during the training represents the distance to the destination 27 while the patient holds the handheld device 10 as still as possible.

In Fig. 4b the patient is holding the handheld with an amount of motion that is below the threshold, i.e. between the walls of the vein 28 and is rewarded with reward information provided by the processor 12 including enforcing imagery and, preferably, sounds, such as a smiling face 31, happy music and/or encouraging words. The patient may also receive a score or other visual rewards (e.g. stars) that increases for the time that the motion amount is lower than the threshold level. The progress bar may comprise markers at various distances which trigger a reward when this is passed without exceeding the threshold level(s).

In Fig. 4c the patient, further in the vein 28 as is shown by the progress bar 25, moved the handheld device too much causing the motion amount to exceed the threshold level, i.e. the turtle 30 touches, or even breaches, the wall of the vein 28. This causes the processor 12 to issue penalty information, such as the smiley face 31 turning into a sad face 31' and/or a warning symbol 32, as well as optional auditory information such as warnings, sound effects, commentary and the like. A score or other visual rewards may be decreased, the user may have to restart from a position further away from the destination 27 or has to restart the training completely.

The interactive part of the training runs for a predetermined amount of time, which may be (much) shorter than the actual time of the procedure, but also may be determined to last exactly as long as the procedure to make the patient experience the time of the procedure already and to train to hold still for extended periods of time.

The training device as claimed may in some cases also be used by the patient during the medical procedure itself. Obviously, the training device that is used must be compatible with the equipment used in the medical procedure and must not distract or hinder the medical personnel during the procedure. The training device becomes a motion guidance device in such situations that can assist in keeping the patient still during the procedure.

In a preferred embodiment the motion guidance device is connected mechanically and/or electronically (wired or wirelessly) to the medical equipment used in the procedure and is able to communicate with said equipment. The motion guidance device may use actual images or other data obtained from the medical equipment to make the session more realistic or relevant to the user or to guide the user to perform a motion if the procedure requires this. There may also be a feedback loop in which the visual information or the time of the guidance is adapted based on the actual (and potentially changing) situation.

The processor 12 of the handheld device 10 may communicate a result or summary of the performance of the patient to a physician or technician, who can then use this to assess how well the patient was trained and the need to further explain this just before or during the procedure.

Also, the processor 12 may transmit the result or summary to another processor or process this data further itself to provide a recommendation for the physician or technician involved in the procedure.

If the patient has performed the training multiple times the performance may be evaluated further to determine if the patent has become better at keeping still and has understood the training properly.

In further embodiments the interactive part of the training may become more difficult on subsequent training sessions, for instance the threshold level(s), such that less motion will trigger the penalty information or the patient has to hold the handheld device longer before a next level in the progress was obtained or the distracting visual and/or auditory information is provided while the patient has to hold the handheld device still.

The training may include even more threshold levels, each with its own penalty or reward information.

The processor may also have a minimum threshold for motion to ensure that the patient is indeed holding the handheld device 10 and that the handheld device 10 is not lying on a surface, such as a table. The motion sensor 13 needs to be sensitive enough to detect micro-movements caused by a patient that is holding the handheld device very still. If the motion amount is lower than the minimum motion threshold the patient may receive a warning or notification indicating that the motion amount seems to be too low.

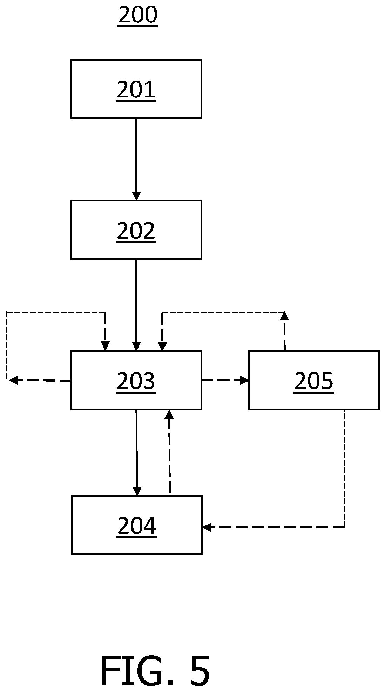

Fig. 5 shows a schematic flowchart of a workflow 200 of a training session using the training device as claimed.

In step 201 the patient intake takes place and the physician determines which type of training device and method is suitable and explains the training to the patient.

In step 202 the patient receives the training device or downloads a computer program or app to his own handheld device, such that it can be used as the training device. Optionally the patient personalizes the game to his or her needs, e.g. by choosing or creating an avatar and/or selecting an initial difficulty level.

In step 203 the patient starts the training by starting the computer program or app on the handheld device and start the interactive part of the motion training. Optionally the patient is first shown an introduction video explaining the medical procedure, the effect of motion and how to perform the interactive part of the training.

In step 204 the patient finishes the training and is properly informed about the effects of motion and the importance of staying still as much as possible. The patient may decide to do the training again.

In an embodiment the performance of the patient during the training is analyzed (step 205). This analysis may be used to direct the player to play it again or to inform that the training has been completed successfully. Also this information may be made available to a physician or technician performing the actual procedure.

If the player is following the training multiple times, then the combined information may be analyzed (step 205) to monitor progress of the patient's ability to hold still.

The training is preferably contained in the form of a computer program installed on the handheld device 10 and controllable by the processor 11. It may be downloadable or pre-stored on the handheld device 10. It may also be stored externally and accessed and run through a wireless connection (such as Bluetooth, WiFi, internet).

While the invention has been illustrated and described in detail in the drawings and foregoing description, such illustration and description are to be considered illustrative or exemplary and not restrictive; the invention is not limited to the disclosed embodiments.

The term 'visual information' in the context of the claimed invention is any information that is visually presented on the screen 11 of the handheld device 10, including images, text, colors, movies, et cetera.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality.

A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A training device for training a patient scheduled to undergo a non-sedated, lightly sedated or locally sedated medical procedure that requires the patient to remain still for an extended period of time, comprising:
- a handheld device comprising
- a display for displaying visual information to the patient;
- a motion sensor arranged to detect motion information, including a motion amount, from the patient when holding the device;
- a processor configured to
- provide the visual information for a predetermined period of time to the patient on the display, wherein the visual information is based on the medical procedure the patient is scheduled to be undergoing;
- receive the motion information from the motion sensor during the predetermined period of time;
- adapt the visual information to include feedback information for the patient, wherein
- the feedback information includes penalty information when the motion amount in the received motion information exceeds a predetermined motion threshold; and/or
- the feedback information includes reward information when the motion amount in the motion information does not exceed the predetermined motion threshold.

2. A training device according to claim 1, wherein the handheld device is a mobile phone, tablet computer or gaming device.

3. A training device according to claim 1 or 2, wherein the processor is arranged to communicate with an external processor that is configured to provide calculation power or additional relevant information.

4. A training device according to any of the previous claims, wherein the motion sensor is an accelerometer.

5. A training device according to any of the previous claims, wherein the visual information is a movie, a game or an image.

6. A training device according to any of the previous claims, wherein the visual information comprises visual and/or auditory representations of the medical procedure the patient is scheduled to be undergoing.

7. A training device according to any of the previous claims, wherein there is at least one further predetermined motion threshold and wherein the processor adapts the visual information differently after passing of each predetermined motion threshold results, for instance in several steps of severity of penalty information and/or reward information.

8. A training device according to any of the previous claims, wherein the medical procedure is a magnetic resonance imaging procedure, an x-ray computed tomography imaging procedure, an ultrasound imaging procedure, a diagnostic x-ray imaging procedure, a positron emission tomography, a single photon emission computed tomography an (image-guided) radiotherapy procedure, an (image-guided) interventional medical procedure or any other medical procedure in which motion may influence image quality or a successful procedure.

9. A training device according to any of the previous claims, wherein the processor is further configured to
- record results of consecutive multiple training sessions;
- display and/or transmit the results of multiple training sessions; and,
- optionally adapt the visual information based on the results of multiple training sessions.

10. A training device according to any of the previous claims, wherein the visual information comprises a graphical representation (avatar) based on the patient scheduled to undergo the medical procedure.

11. A motion guidance device for guiding a patient undergoing a medical procedure comprising:
- a training device according to any of the previous claims that is compatible with and/or adapted for use during the medical procedure.

12. A motion guidance device according to the previous claim wherein the training device is connected mechanically and/or electronically to equipment used in the medical procedure, for instance a medical imaging system or a workstation for radiotherapy or image guided interventional procedures.

13. A method for training for training a patient scheduled to undergo a medical imaging procedure, comprising the steps of:
- providing visual information for a predetermined period of time relating to the medical imaging procedure to the patient on the display;
- receiving the motion information, including a motion amount, from a motion sensor of a handheld device that, when in use, is held by the patient during the predetermined period of time;
- adapt the visual information based on the received motion information,
wherein:
- when the motion amount in the motion information exceeds a predetermined motion threshold, the visual information is adapted to include penalty information; and/or
- when the motion amount in the motion information does not exceed the predetermined motion threshold, the visual information is adapted to include reward information.

14. A method according to the previous claim, further comprising the steps of:
- recording results of consecutive multiple training sessions;
- displaying and/or transmit the results of multiple training sessions; and,
- optionally adapting the visual information based on the results of multiple training sessions.

15. A computer program product configured to perform, when in use, the steps of claims 13 or 14.
